# EUROPÄISCHE PATENTANMELDUNG

(11) **EP 1 889 756 A2**
(43) Veröffentlichungstag der Anmeldung: **20.02.2008**
(21) Anmeldenummer: 07113952.1
(22) Anmeldetag: 07.08.2007
(51) Int. Cl.: B60R 21/13

(54) **Überrollschutzsystem für Kraftfahrzeuge mit mindestens einem Überrollbügel**

(30) Priorität: 17.08.2006 DE 102006038757
(71) Anmelder: Automotive Group ISE Innomotive Systems Europe GmbH, 51702 Bergneustadt (DE)
(72) Erfinder: Zupancic, Manuela, 51702 Bergneustadt (DE); Nass, Michael, 51702 Bergneustadt (DE); Röhner, Stephan, 44287 Dortmund (DE); Nowack, Reinhard, 57489 Drolshagen (DE); Latussek, Holger, 51702 Bergneustadt (DE)
(74) Vertreter: Fuchs

(57) **Zusammenfassung**

Derartige Systeme besitzen typischerweise einen U-förmigen Überrollbügel (1) bestehend aus einem Bügelkopf (2) und zwei, jeweils an einem Kopfende angebrachten Bügelschenkeln (3, 4).

Um einen geringen Überstand des Bügelkopfes (2) durch eine nicht zu hoch aufbauende schraubenlose Eckverbindung zu erzielen, in Verbindung mit einem verbesserten nachgiebigen Verhalten des Überrollbügels (1) quer zur Fahrzeuglängsachse, sieht die Erfindung vor, dass die Bügelschenkel (3, 4) mit dem Bügelkopf (2) rechtwinklig direkt zusammengefügt sind und der Überrollbügel (1) in mindestens einem Bereich nachgiebig quer zur Fahrzeuglängsachse ausgebildet ist.

## Beschreibung

Die Erfindung bezieht sich auf ein Überrollschutzsystem für Kraftfahrzeuge, mit mindestens einem U-förmigen Überrollbügel, bestehend aus einem Bügelkopf und zwei, jeweils an einem Kopfende angebrachten Bügelschenkeln.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Man unterscheidet dabei zwei grundsätzlich verschiedene Systeme. Das eine System bezieht sich auf sogenannte starre oder passive Überrollbügel, die höhen-unveränderlich fest im Fahrzeug verankert sind.

Es ist dabei bekannt, einen die gesamte Fahrzeugbreite überspannenden, starren Überrollbügel vorzusehen (EP 0 233 777) oder jedem Fahrzeugsitz einen starren Überrollbügel (DE 196 04 423) zuzuordnen.

Neben diesen starren Überrollbügeln sind auch weit verbreitet konstruktive Lösungen für sogenannte aktive Überrollbügelsysteme im Markt, bei denen der Überrollbügel im Normalzustand in einer unteren Ruhelage abgelegt ist, und im Gefahrenfall, also bei einem drohenden Überschlag, sensorgesteuert mittels eines Energiespeichers schnell in eine obere schützende verriegelte Position aufgestellt wird, um zu verhindern, dass die Fahrzeuginsassen durch das sich überschlagende Fahrzeug erdrückt werden.

Diese "aktiven" Überrollschutzsysteme weisen typischerweise für jeden Sitz einen in einem fahrzeugfesten Kassetten-Gehäuse mit seinen Bügelschenkeln meist linear geführten U-förmigen Überrollbügel auf, der im Normalzustand gegen die Vorspannkraft einer AntriebsDruckfeder durch eine Haltevorrichtung in einer unteren Ruhelage gehalten wird, und im Überschlagfall sensorgesteuert unter Lösen der Haltevorrichtung, durch die Federkraft der Antriebsdruckfeder in eine obere, stützende Stellung bringbar ist, wobei eine dann in Wirkeingriff tretende Verriegelungseinrichtung ein Eindrücken des Überrollbügels in die Kassette verhindert.

Eine derartige sitzbezogene Kassetten-Konstruktion eines Überrollbügelschutzsystems mit linear aufstellendem Überrollbügel zeigt beispielsweise die DE 100 40 642 C1. Anstelle eines U-förmigen Überrollbügels kann der ausfahrbare Teil eines Überrollschutzsystems auch durch ein stabiles Profilteil gebildet sein.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges System weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für die Bügelschenkel von zwei nebeneinander angeordneten U-förmigen Überrollbügeln aufweist sowie bestehend zum anderen aus sich vertikal nach unten erstreckenden Profil-Trägerelementen mit einem Bodenteil für die Aufnahme der üblichen Komponenten des ausfahrbaren Überrollschutzsystems. Es ist dabei auch bekannt, zwei in sich geschlossene Kassettensysteme mit jeweils einem aktiven Überrollbügel in einem Rückwandträger zu integrieren (DE 100 44 926 C1).

Es sind ferner auch Überrollschutzsysteme mit einem annähernd die gesamte Fahrzeugbreite überspannenden, aktiv aufstellbaren U-förmigen Überrollbügel bekannt. Dabei kann der Bügelkopf als durchgehende Bügelschale (DE 195 40 819 A1) oder als Querjoch gemäß der DE 197 12 955 A1 ausgebildet sein, oder kann im Bereich der Fahrzeugsitze bügelartige Ausformungen in einem Querjoch aufweisen (DE 100 44 930 C1).

Die Erfindung bezieht sich einmal sowohl auf starre als auch auf aktiv aufstellbare U-förmige Überrollbügel, vorzugsweise auf letztere, und zum anderen sowohl auf sitzbezogene als auch auf wagenbreite U-förmige Überrollbügel, vorzugsweise auf letztere, bei denen vorzugsweise Bügelrohre Anwendung finden.

Der Bügelkopf stellt beim Überschlag mit dem Boden den direkten Kontakt her und leitet die dabei auftretenden Kräfte bzw. Belastungen in die zugehörigen Abstützelemente des Systems (Kassettengehäuse, Wagenboden, etc.) ein. Bei einseitigen Aufschlägen sollen die Kräfte auch von der einen Schenkelseite auf die andere Schenkelseite übertragen werden.

Um dieses abzutesten werden die Systeme u. a. dem Dachdrucktest oder Seitenaufpralltest unterzogen. Es ist Aufgabe der Entwickler die Dimensionen und Konfigurationen so abzustimmen, dass die einzuhaltenden Testforderungen in Abhängigkeit von diversen Einflussgrößen und Kriterien auch erfüllt werden. Viele diese Bedingungen sind durch den Fahrzeughersteller fest vorgegeben, wie Bauraum, Masse des Fahrzeugs, Abmessungen, usw. Andere Parameter sind Materialien, Herstellerverfahren, Kostenrahmen, usw. Diese Vorgaben lassen dem Entwickler nur einen geringen konstruktiven Spielraum.

Eine wesentliche Vorgaben ist dabei, wie sich der Überrollbügel unter Belastung verhalten soll, d. h. wie stabil bzw. wie nachgiebig sich das System verhalten soll, um zusammen mit der Karosse ein abgestimmtes Verhalten zu gewährleisten. Dabei kommt der Seitencrashempfindlichkeit des Überrollbügels quer zur Fahrzeuglängsachse, d. h. in der sogenannten Y-Richtung eine besondere Bedeutung bei.

An ein Überrollschutzsystem werden aber auch optische Anforderungen gestellt. So soll z. B. im abgelegten Zustand der Bügelkopf nicht zu hoch aufbauen, weil sonst die Unterbringung des Überrollbügels im Fahrzeug schwierig wird und daraufhin aufwendige Abdeckungen durch Hauben oder Kappen über dem Bügelkopf erforderlich werden.

Bei Überrollbügeln aus einem gebogenen Rohr ist für den Biegeradius in Abhängigkeit vom Rohrdurchmesser (d) und dem Material ein Mindestmaß einzuhalten. Dadurch bedingt baut das Bügelrohr im Bereich des Bügelkopfes stark nach oben auf. Der Biegeradius liegt gewöhnlich bei 1,5 x d, d. h. bei einem Rohr von 40 mm Durchmesser ergibt sich ein relativ hoher Überstand vom 40 + 60 mm = 100 mm.

Um einen hohen Überstand zu vermeiden wäre es denkbar, die Schenkelrohre und das Querrohr im rechten Winkel zusammenzufügen, d. h. entweder stumpf aneinander zu setzen oder auf Gehrung miteinander zu verbinden. Hiermit könnte ein bedeutend geringeres Überstandsmaß von 40 - 50 mm erreicht werden. Nachteilig ist aber bei einer solchen Lösung, dass die Verbindungs-Ecken damit so stabil ausgebildet sind, dass dadurch eine Verformung im Crashfall nicht erreicht wird. Es kommt zur Überlastung und damit zum Bruch dieser Fugestellen.

Um ein geringes Überstandsmaß bei einem aktiv aufstellbaren wagenbreiten Überrollbügel zu erreichen, sehen die bereits hierzu zitierten Schriften DE 195 40 819 und DE 197 12 955 eine gelenkige Schraubverbindung zwischen Bügelkopf und den geführten Bügelschenkel vor, die auch ein Verkanten des breiten Überrollbügels bei seinem Aufstellen, d. h. den sogenannten Schubladeneffekt, verhindern soll. Die bekannten Lösungen sind relativ aufwändig und benötigen relativ viel Bauraum. Insbesondere ist bei einseitigen Aufschlägen in Y-Richtung das Verhalten des Überrollbügels relativ starr und es können auch Verspannungen, die sich aus dem Einbau des Überrollbügels in das Fahrzeug ergeben, nicht zufriedenstellend eliminiert werden.

Der Erfindung liegt die Aufgabe zugrunde, einen Überrollbügel für das eingangs bezeichnete Überrollschutzsystem zu schaffen, der in sich nachgiebiger ausgestaltet ist und nicht zu hoch aufbaut und der dabei ohne Schraubverbindung zwischen Schenkelrohren und Bügelkopf auskommt.

Die Lösung dieser Aufgabe gelingt bei einem Überrollschutzsystem für Kraftfahrzeuge, mit mindestens einem U-förmigen Überrollbügel bestehend aus einem Bügelkopf und zwei, jeweils an einem Kopfende angebrachten Bügelschenkeln, gemäß der Erfindung dadurch dass, die Bügelschenkel mit dem Bügelkopf rechtwinklig direkt zusammengefügt sind und der Überrollbügel in mindestens einem Bereich nachgiebig quer zur Fahrzeuglängsachse ausgebildet ist.

Die rechtwinklige, direkt verfügte Eckverbindung ermöglicht auf einfache Weise einen Überrollbügel mit relativ geringem Überstand, wobei durch den nachgiebig in Y-Richtung ausgestalteten Bereich seitliche Aufpralllasten besser absorbiert werden, so dass die Fügestellen nicht aufreißen sowie Verspannungen bei der Montage sowie beim Aufstellen des Überrollbügels, d. h. der Schubladeneffekt minimiert werden.

Der nachgiebige Bereich kann in verschiedener Weise ausgebildet sein, z. B. durch einen in Y-Richtung teleskopierbaren Bügelkopf und/oder dadurch, dass die Enden des Bügelkopfes über nachgiebige Eckelemente mit den Enden der Bügelschenkel verbunden sind.

Durch diese Eckelemente ist es möglich, die beiden annähernd in einem Winkel von 90° zueinander verlaufenden Enden des Bügelkopfes und der Bügelschenkel nachgiebig miteinander zu verbinden, so dass bei sehr geringem Überstand durch die nicht zu hoch aufbauende Eckverbindung ein in sich nachgiebig, elastisch und/oder plastisch verformender Überrollbügel geschaffen wird, der insbesondere seitliche Aufpralllasten optimal absorbiert und auch Verspannungen bei der Montage sowie beim Aufstellen des Überrollbügels, d. h. den Schubladeneffekt in besonders effektvoller Weise minimiert

Weiterbildungen und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen eines Überrollbügels wird die Erfindung näher erläutert.

Es zeigen:

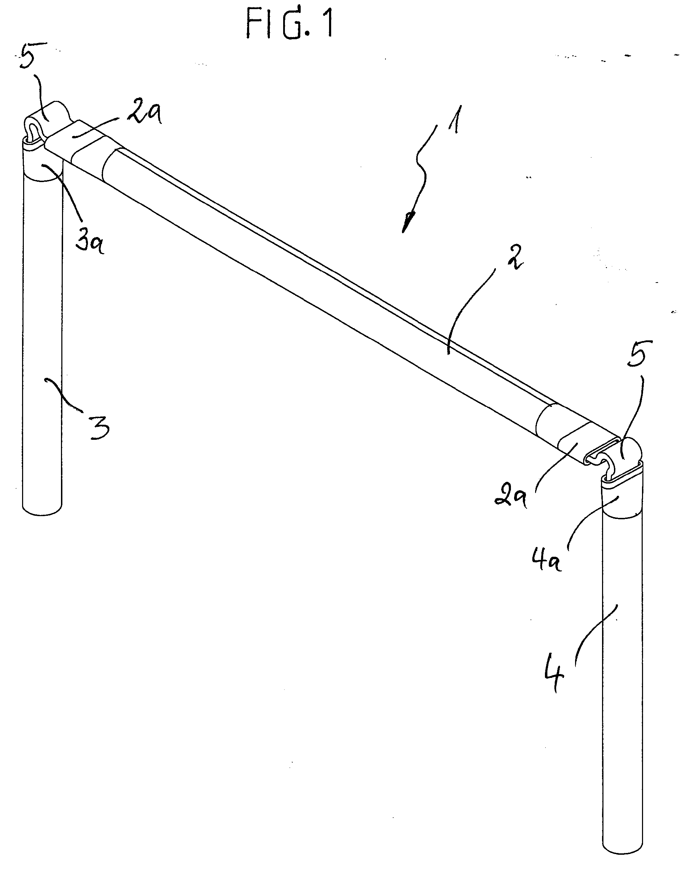

- Fig. 1: in einer isometrischen Darstellung einen dreigeteilten, U-förmigen wagenbreiten Überrollbügel, bestehend aus einem querjochartigen Überrollkopf und zwei Bügelschenkeln, die jeweils rohrförmig ausgebildet sind, wobei die Rohrenden jeweils über nachgiebig verformbare Eckelemente miteinander verbunden sind,

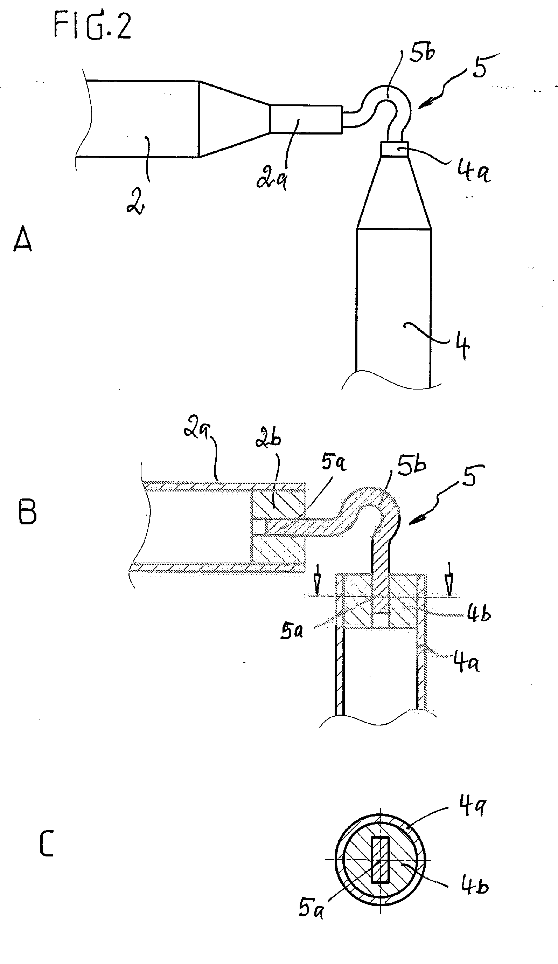

- Fig. 2: in drei Figureneilen A, B, C, Ausschnitte aus einem Eckbereich des Überrollbügels nach Fig. 1, mit einer Seitenansicht im Figurenteil A, eine Längsschnitt-Darstellung des Ausschnittes nach Fig. 2 A im Figurenteil B und mit einer Querschnitts-Darstellung im Figurenteil C, genommen entlang der Schnittlinie im Bügelschenkel des Figurenteils B,

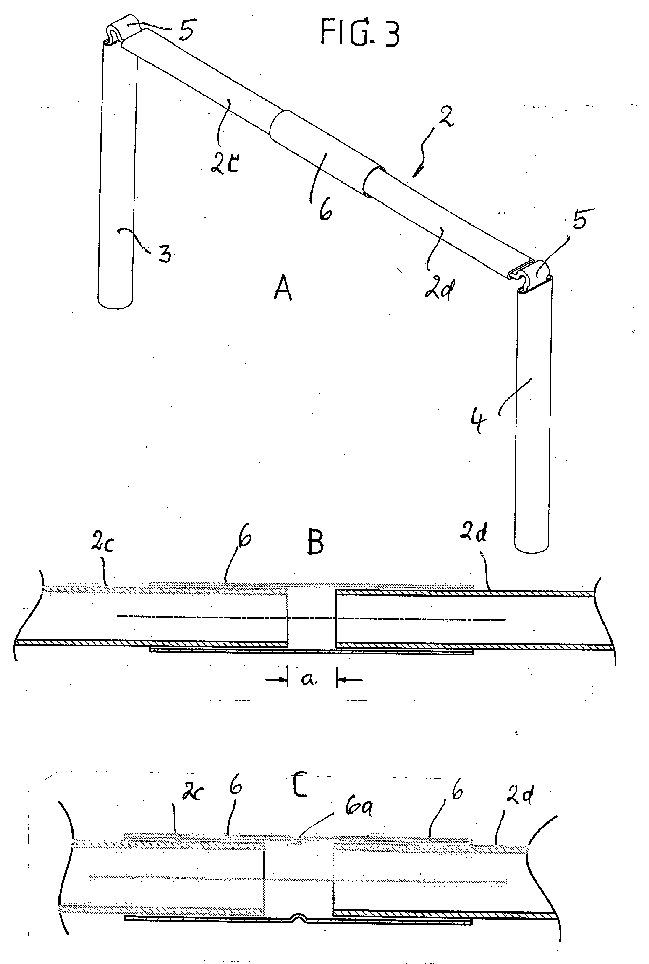

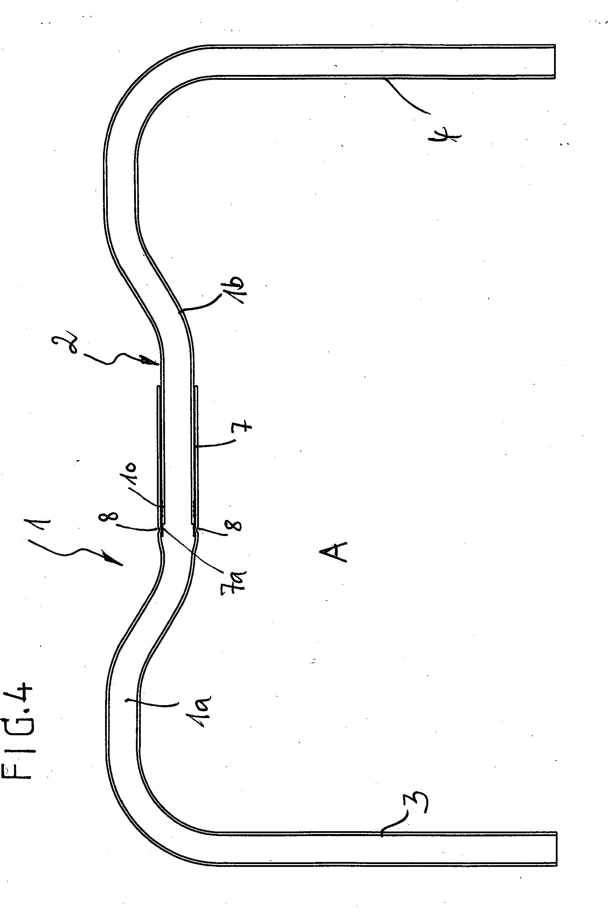

- Fig. 3: in drei Teilfiguren A, B und C eine zweite Ausführungsform der Erfindung, bei der mittels eines teleskopierbaren Bügelkopfes zusätzlich im Bügelkopf selbst ein axialer Wegausgleich vorgesehen ist, mit einer isometrischen Gesamtdarstellung des Überrollbügels im Figurenteil 3A und zwei Varianten der Wegausgleichsmittel in den axialen Längsschnitten der Figurenteile B und C, und

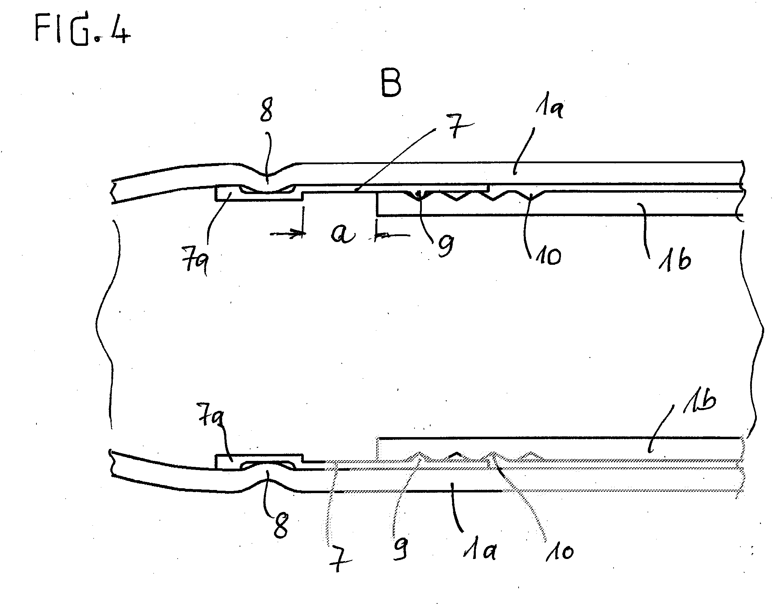

- Fig.4: in zwei Figurenteilen A, B eine dritte Ausführungsform des erfindungsgemäßen Überrollbügels bestehend aus zwei teleskopierbaren Teilrohren, die sich verrastbar überlappen, mit einer Längsschnitt-Gesamtdarstellung im Figurenteil A und einer vergrößerten Ausschnitt-Darstellung des Überlappungsbereiches im Figurenteil B.

Die Figur 1 zeigt in einer vereinfachten isometrischen Darstellung einen erfindungsgemäß ausgebildeten wagenbreiten U-förmigen Überrollbügel 1. Der besseren Übersicht halber, ist nur die Konstruktion des Überrollbügels selbst dargestellt. Weder seine Unterbringung in dem Kraftfahrzeug noch die übrigen üblichen Komponenten des Überrollschutzsystems sind dargestellt. Sie sind hinlänglich bekannt und brauchen daher hier nicht näher beschrieben zu werden.

Der dargestellte Überrollbügel kann der ausfahrbare Teil eines aktiven Schutzsystems sein oder er kann auch ein fest installierter starrer Überrollbügel sein.

Auch kann der Überrollbügel sitzbezogen ausgebildet sein, wenngleich sich die Vorteile der Erfindung gerade bei wagenbreiter Ausbildung des Überrollbügels besonders deutlich zeigen.

Der Überrollbügel 1 ist aus einem querjochartigen Bügelkopf 2 und zwei Bügelschenkeln 3, 4 zusammengesetzt. Sowohl der Bügelkopf 2 als auch die Bügelschenkel 3, 4 bestehen dabei aus Rohren, die vorzugsweise einen kreisrunden Querschnitt haben, die jedoch auch einen ovalen oder eckigen Querschnitt besitzen können. Die Rohre sind vorzugsweise Stahlrohre, können aber auch durch Leichtmetallprofilkörper gebildet sein. Der Begriff "Rohr" ist daher bezogen auf die hier beschriebene Erfindung im weitesten Sinne zu verstehen.

Die Verbindung zwischen den Enden des Bügelkopfes 2 einerseits und den Enden der Bügelschenkel 3, 4 andererseits erfolgt nicht durch Stoffschluss, sondern jeweils über ein Eckelement 5.

Die Eckelemente 5 bestehen aus einem Material, das einerseits genügend stabil ist, um die beim Überschlag auftretenden Kräfte zerstörungsfrei auffangen zu können, das aber andererseits nachgiebig ist. Vorzugsweise wird jeweils ein Eckelement 5 verwendet, welches elastisch und/oder plastisch verformbar ist, d. h. in der Lage ist, die Bügelschenkel 3, 4 und den Bügelkopf 2 nachgiebig miteinander zu verbinden. Das Eckelement 5 ist dabei jeweils mit den beiden annähernd in einem Winkel von 90° zueinander verlaufenden Rohrenden von Bügelkopf und Bügelschenkel miteinander verbunden und erfährt bei einer angreifenden Belastung gezielt und gewollt eine elastische bzw. plastische Verformung, welche bei niedrigem Überstand ein Brechen des Überrollbügels verhindert. Ferner können durch das elastische Verhalten Verspannungen, die sich aus dem Einbau des Überrollschutzsystems in das Fahrzeug ergeben, eliminiert bzw. mindestens stark reduziert werden.

Das Eckelement kann, wie in den beiden Figuren 1 und 2 dargestellt, beispielsweise durch ein Federelement aus Flachmaterial gebildet sein, welches in den endseitig abgeflachten Rohrenden 2a bzw. 3a und 4a formschlüssig aufgenommen ist, wobei mindestens ein Ende 5a des Federelementes in dem zugehörigen Bügelschenkelrohr bzw. Bügelkopf 2 axial verschiebbar aufgenommen ist. Die elastische Federwirkung wird durch die schleifenförmige Ausbildung 5b bewirkt, ggf. in Verbindung mit einem elastisch nachgiebigen Werkstoff.

Bei der Ausführungsform nach Fig. 2 B sind beide Enden 5a des Federelementes 5 in den zugehörigen Rohrenden 2a, 4a aufgenommen. Dazu ist in den Rohrenden jeweils eine Gleitbuchse 2b, 4b mit einer inneren, axialen Bohrung angebracht, welche das zugehörige Ende 5a des Federelementes im Formschluss gleitend geführt aufnimmt.

Das Eckelement 5 kann aus einem Federstahl hergestellt sein. Es kann jedoch aus einem anderen adäquaten Material hergestellt sein.

Anstelle des dargestellten Eckelementes 5 können die Rohrenden auch über andere elastische Konstruktionen miteinander verbunden sein.

Beim Angreifen einer seitlich einseitig im Bereich des Bügelschenkels 4 angreifenden äußeren Kraft auf den Überrollbügel nach Fig. 1 vollzieht sich folgender Ablauf:
- das Schenkelrohr 4 verformt sich elastisch in Richtung zur Fahrzeugmitte hin,
- unter dieser Kraft verformen sich beide Federelemente 5 unter gleichzeitiger Verschiebung des Bügelkopfes 2 in Richtung des gegenüber liegenden Bügelschenkelrohres 3,
- nach Überwindung der Federwege kommen die drei Rohre 2, 3 und 4 miteinander zur Anlage und das auf der Gegenseite befindliche Bügelschenkelrohr erhält über das Bügelkopfrohr die volle Belastung, die von Außen auf das erste Bügelschenkelrohr 4 angreift.

Mit dieser stufigen Kraftübertragung wird die erste Spitzenbelastung, d. h. der erste Belastungsimpuls, federnd aufgenommen und weitergegeben und die dann folgende Belastung wird über einen definierten Weg bzw. eine Verformung aufgenommen.

In dem dargestellten Ausführungsbeispiel sind die Eckelemente 5 gesonderte Bauteile, die mit konventionellen Techniken mechanisch miteinander verbunden sind.

Es ist auch denkbar, den U-förmigen Überrollbügel einstückig aus einem Rohr herzustellen, wobei die Eckelemente nach dem Verfahren gemäß der älteren Patentanmeldung DE 10 2006 002 941.0 ausgeformt werden.

In Fig. 3 ist in drei Figurenteilen A, B und C eine zweite Ausführungsform der Erfindung dargestellt, die sich aus einer Weiterentwicklung der Ausführungsform nach den Figuren 1 und 2 ergibt. Bei der zweiten Ausführungsform ist der rohrförmige Bügelkopf 2 zusätzlich durch Teilung axial teleskopierbar ausgebildet. Das Rohr des Bügelkopfes wird bei der zweiten Ausführungsform nicht als durchgehendes Rohr eingebaut, sondern besteht aus zwei Teilrohren, 2c, 2d, die stirnseitig mit axialem Abstand "a" zueinander angeordnet sind, um eine Verschiebung in Y-Richtung zu schaffen. Dabei sind verschiedene Varianten und Untervarianten möglich.

Bei der in Fig. 3 dargestellten Variante ist über die Teilungsstelle eine Hülse 6 aufgebracht, innerhalb welcher sich die abgeteilten Enden der Teilrohre 2c, 2d des Bügelkopfes axial verschieben können, wie insbesondere der Figurenteil 3B zeigt. Die Teilrohre 2c, 2d und die Hülse 6 sind toleranzmäßig so zueinander abgestimmt, dass ein leichter bis strammer Schiebesitz erreicht wird.

In einer Untervariante gemäß Figurenteil 3C kann dabei an der Hülse 6 eine ringförmige Sicke 6a, ausgebildet sein, welche die Verschiebbarkeit in axialer Richtung begrenzt und auch eine dämpfende Wirkung ausübt.

In dem Raum zwischen den beiden Stirnseiten der Teilrohre 2c, 2d können auch zusätzliche insbesondere elastische dämpfende Komponenten eingebaut sein, die vorzugsweise ringförmig ausgebildet sind.

Anstelle einer Außenhülle 6 kann auch ein muffenartiges Rohrzwischenstück eingebaut sein, das an beiden Enden jeweils eine kappenartige bzw. hülsenartige Aufnahme für die Stirnseite des zugehörigen Teilrohres 2c, 2d aufweist und das so ausgebildet ist, dass eine begrenzte, gegebenenfalls auch gedämpfte, axiale Verschiebbarkeit der Stirnseite gegeben ist.

Die längenmäßige Differenz zwischen den Stirnseiten der Teilrohe kann auch durch mindesten sein ringförmiges Element ausgefüllt werden, welches unterschiedliche Härten bzw. Elastizitäten haben kann und welches ohne oder mit unterschiedlichem axialen oder radialen Spiel eingebaut werden kann.

Es sind auch mehrere Ringelemente mit unterschiedlicher Festigkeit bzw. Elastizität einsetzbar, um einen vorgebbaren Verlauf der Kraft-/Weg-Kurven zu erzielen. Dadurch kann das Verhalten der Überrollbügel bei seitlich auftretender Belastung im unteren Belastungsniveau einstellbar gemacht werden. Bei anliegend hoher Belastung wird der Überrollbügel nach Überwindung des elastischen Bereiches ein starres Verhalten einnehmen.

Anstelle einer Außenhülse 6, wie dargestellt, kann auch eine Innenhülse für die Verbindung der Stirnseiten der Teilrohre vorgesehen sein.

Das in Fig. 3 dargestellte und vorbeschriebene Prinzip der begrenzten Y-Längsverschiebbarkeit mit zwei Teilrohren und einer verbindenden Hülse für den Bügelkopf kann auch ohne die Eckelemente 5 angewendet werden, jedoch stellt die Konstruktion nach Fig. 3 eine bevorzugte, vorteilhafte Ausführungsform dar.

In Fig. 4 ist in zwei Figurenteilen A und B eine dritte Ausführungsform der Erfindung mit einem Wegausgleich des Überrollbügels in Y-Richtung dargestellt. Diese Ausführungsform basiert wie die zweite Ausführungsform nach Fig. 3 auf einem Y-teleskopierbarem Bügelkopf. Der dargestellte Überrollbügel besteht aus zwei Teilrohren 1a, 1b, die jeweils einstückig einen Bügelschenkel mit der zugehörigen Rohrhälfte des Bügelkopfes aufweist. Die Enden der beiden Teilrohre sind überlappend ineinander geschoben. Eine übergreifende Hülse wie im Fall der Fig. 3 ist nicht vorgesehen. Im äußeren Teilrohr 1a ist eine Kunststoffbuchse verstemmt, z. B. indem sie mit einem Ende, wie in Fig. 4B dargestellt, mit einer Ausbuchtung 7a in der Auswölbung einer vorzugsweise ringförmigen Sicke 8 formschlüssig aufgenommen ist. Am anderen Ende besitzt die Kunststoffbuchse 7 einen vorzugsweise umlaufenden Rastbund 9, der in Wirkkontakt mit komplementären Rastrillen 10 im inneren Teilrohr 1 b bringbar ist.

Im Ausgangszustand ist der Rastbund 9 der Kunststoffbuchse 7, wie dargestellt, in der vordersten Rastrille 10 aufgenommen. Bei Auftreten einer Seitenlast verschieben sich die Enden der Teilrohre 1 a, 1b zueinander. Dabei rastet der Rastbund 9 nacheinander in die einzelnen Rastrillen ein, bis der Abstand "a" überwunden ist, wodurch ein bestimmtes Verhalten des Bügelkopfes in Y-Richtung vorgebbar ist.

Es versteht sich, dass das in Fig. 4 dargestellte Weg-Ausgleichsprinzip auch bei einem dreigeteilten Überrollbügel nach den Fig. 1 - 3 anwendbar ist, wobei dann vorzugsweise die Bügelschenkel mit dem Bügelkopf zusätzlich über die nachgiebigen Eckelemente 5 miteinander verbunden sind.

Die in den Fig. 3 und 4 dargestellten Ausführungsformen mit den beschriebenen Untervarianten gewährleisten, dass auch im Bügelkopf selbst ein Längenausgleich in Y-Richtung, d. h. quer zur Fahrzeuglängsachse X in einer vorbestimmten Größe mit vorbestimmtem Verhalten erfolgen kann. Der Einsatz der erfindungsgemäßen Überrollbügel erfolgt dabei bevorzugt bei fahrzeugbreiten Überrollbügeln, da diese aufgrund ihrer großen Spannweite bei ihrer Aufstellung zum Verklemmen neigen (Schubladeneffekt). Dieses Problem vergrößert sich noch dadurch, wenn bei einem Unfall vor oder während des Überschlagens eine Bügelseite bzw. deren Führung durch äußere Kräfte verformt werden.

Die Problematik kann durch die erfindungsgemäßen Maßnahmen signifikant reduziert werden, insbesondere durch eine Kombination des Wegausgleichs im Bügelkopf selbst mit den nachgiebigen Eckelementen in der rechtwinkligen Anbindung der Bügelschenkel an dem Bügelkopf. Durch diese rechtwinklige Anbindung ist zudem ein geringer Überstand des Überrollbügels erzielbar.

### Bezugszeichenliste

- 1.: Überrollbügel
- 1 a, 1b: Teilrohre
- 2.: Bügelkopf
- 2a: abgeflachtes Rohrende
- 2b: Gleitbuchse
- 2c, 2d: Teilrohre
- 3, 4: Bügelschenkel
- 3a, 4a: abgeflachtes Rohrende
- 4b: Gleitbuchse
- 5: Eckelement
- 5a: Eckelement-Ende
- 5b: schleifenförmige Ausbildung
- 6: Hülse
- 6a: Sicke
- 7: Kunststoffbuchse
- 7a: Ausbuchtung
- 8: Sicke
- 9: Rastbund
- 10: Rastrillen

## Patentansprüche

1. Überrollschutzsystem für Kraftfahrzeuge, mit mindestens einem U-förmigen Überrollbügel (1) bestehend aus einem Bügelkopf (2) und zwei, jeweils an einem Kopfende angebrachten Bügelschenkeln (3, 4), **dadurch gekennzeichnet, dass** die Bügelschenkel (3, 4) mit dem Bügelkopf (2) rechtwinklig direkt zusammengefügt sind und der Überrollbügel (1) in mindestens einem Bereich nachgiebig quer zur Fahrzeuglängsachse ausgebildet ist.

2. Überrollschutzsystem nach Anspruch 1, **dadurch gekennzeichnet, dass** die Bügelschenkel (3, 4) und der Bügelkopf (2) rohrförmig ausgebildet sind.

3. Überrollschutzsystem nach Anspruch 1 oder 2, **dadurch gekennzeichnet, dass** die Bügelschenkel (3, 4) und der Bügelkopf (2) einstückig miteinander verbunden sind.

4. Überrollschutzsystem nach Anspruch 1 oder 2, **dadurch gekennzeichnet, dass** die Bügelschenkel (3, 4) und der Bügelkopf (2) getrennte Bauteile sind, die stoffschlüssig oder formschlüssig miteinander verbunden sind.

5. Überrollschutzsystem nach Anspruch 3 oder 4, **dadurch gekennzeichnet, dass** die Enden (2a) des Bügelkopfes (2) über nachgiebige Eckelemente (5) mit den Enden (3a, 4a) der Bügelschenkel (3, 4) verbunden sind.

6. Überrollschutzsystem nach Anspruch 5 **dadurch gekennzeichnet, dass** das Eckelement (5) elastisch und/oder plastisch verformbar ausgebildet ist.

7. Überrollschutzsystem nach Anspruch 6, **dadurch gekennzeichnet, dass** das Eckelement (5) einen elastisch verformbaren schleifenförmigen Abschnitt (5b) aufweist.

8. Überrollschutzsystem nach einem der Ansprüche 5 bis 7, **dadurch gekennzeichnet, dass** das Eckelement (5) als separates Bauteil ausgebildet ist.

9. Überrollschutzsystem nach Anspruch 8, **dadurch gekennzeichnet, dass** das Eckelement (5) aus einem Flachmaterial besteht und mit seinen beiden Enden (5a) formschlüssig in abgeflachten Rohrenden (2a, 3a, 4a) des Bügelkopfes (2) bzw. der Bügelschenkel (3, 4) aufgenommen ist.

10. Überrollschutzsystem nach Anspruch 9, **dadurch gekennzeichnet, dass** zumindest ein Ende (5a) des Eckelementes (5) axial verschiebbar in dem zugehörigen Bügelschenkel (3, 4) bzw. Bügelkopf (2) aufgenommen ist.

11. Überrollschutzsystem nach Anspruch 10, **dadurch gekennzeichnet, dass** in dem jeweiligen Ende (2a, 3a, 4a) des Bügelschenkels (3, 4) bzw. des Bügelkopfes (2) jeweils eine Gleitbuchse (2b, 3b, 4b) angebracht ist, die eine innere axiale Bohrung besitzt, welche das zugehörige Ende (5a) des Eckelementes (5) im Formschluss gleitend geführt aufnimmt.

12. Überrollschutzsystem nach einem der Ansprüche 8 bis 11, **dadurch gekennzeichnet, dass** das Eckelement (5) aus Federstahl besteht.

13. Überrollschutzsystem nach einem der Ansprüche 5 bis 7, **dadurch gekennzeichnet, dass** das Eckelement einstückig mit dem Bügelkopf und den Bügelschenkeln verbunden ist.

14. Überrollschutzsystem nach einem der Ansprüche 1 bis 13, **dadurch gekennzeichnet, dass** der Bügelkopf (2) mindestens zweigeteilt ist und die Teilköpfe (1a, 1b; 2c, 2d) axial nachgiebig längsverschiebbar zusammengefügt sind.

15. Überrollschutzsystem nach Anspruch 14, **dadurch gekennzeichnet, dass** die Stirnseiten der Teilköpfe (2c, 2d) über eine Hülse (6) beabstandet miteinander verbunden sind.

16. Überrollschutzsystem nach Anspruch 15, **dadurch gekennzeichnet, dass** die Hülse (6) eine Durchmesserverjüngung (6a) aufweist.

17. Überrollschutzsystem nach Anspruch 15 oder 16, **dadurch gekennzeichnet, dass** in dem Raum zwischen den Stirnseiten der Teilköpfe elastisch und/oder plastisch verformbare Komponenten angeordnet sind.

18. Überrollschutzsystem nach Anspruch 14, **dadurch gekennzeichnet, dass** die stirnseitigen Enden der Teilköpfe (1a, 1 b) überlappend miteinander zusammengefügt sind.

19. Überrollschutzsystem nach Anspruch 18, **dadurch gekennzeichnet, dass** im Überlappungsbereich an der Innenwandung und des äußeren Teilkopfes (1a) eine Kunststoffbuchse (7) verstemmt ist, die einen Rastbund (9) besitzt und dass an der Außenwandung des inneren Teilkopfes (1 b) eine Folge von Rastrillen (10) für einen positionsabhängigen Wirkkontakt mit dem Rastbund angeformt ist.
